# EUROPEAN PATENT APPLICATION

(11) **EP 3 310 014 A1**
(43) Date of publication of application: **18.04.2018**
(21) Application number: 15900645.1
(22) Date of filing: 07.08.2015
(51) Int. Cl.: H04L 27/26

(54) **DATA TRANSMISSION METHOD, DEVICE AND SYSTEM**

(71) Applicant: Huawei Technologies Co., Ltd., Longgang District Shenzhen, Guangdong 518129 (CN)
(72) Inventor: XU, Kai, Shenzhen Guangdong 518129 (CN); LI, Xiaocui, Shenzhen Guangdong 518129 (CN)
(74) Representative: Pfenning, Meinig & Partner mbB
(86) International application number: PCT/CN2015/086381
(87) International publication number: WO 2017/024446

(57) **Abstract**

Embodiments of the present invention provide a data transmission method, a device, and a system, and relate to the communications field, so as to narrow a blind detection range of a receive end, and accordingly reduce UE power consumption. The method includes: configuring, by a base station, a sub frame of an unlicensed carrier as n windows, where n is a positive integer; obtaining, by the base station, a window identifier of a window to which an OFDM symbol corresponding to a start location for sending data belongs, where the window corresponding to the window identifier includes m orthogonal frequency division multiplexing OFDM symbols, and m is a positive integer; and sending, by the base station, the window identifier to user equipment by using a licensed carrier. The embodiments of the present invention are applied to data transmission.

## Description

### TECHNICAL FIELD

The present invention relates to the communications field, and in particular, to a data transmission method, a device, and a system.

### BACKGROUND

Spectrums used in a wireless communications system are classified into two types: a licensed spectrum (English: licensed spectrum) and an unlicensed spectrum (English: unlicensed spectrum). For a commercial mobile communications system, an operator needs to obtain the licensed spectrum at an auction, and after obtaining a license, may carry out a mobile communications operation activity by using the corresponding spectrum. The unlicensed spectrum does not need to be auctioned, and anyone can legitimately use these frequency bands, for example, WiFi (English full name: Wireless-Fidelity, Chinese: Wireless Fidelity) devices on 2.4 GHz and 5 GHz frequency bands. Generally, a carrier on the licensed spectrum is referred to as a licensed carrier, and a carrier on the unlicensed spectrum is referred to as an unlicensed carrier. With development of wireless communications technologies, there is an increasing amount of information transmitted in a wireless communications network. Preempting an unlicensed spectrum to transmit information can improve a data throughput in the wireless communications network, and better meet a user requirement. In a Long Term Evolution unlicensed spectrum (English full name: Licensed-Assisted Access Using Long Term Evolution, LAA-LTE for short) system, an LAA-LTE node uses a channel resource by using a listen before talk (English full name: listen before talk, LBT for short) rule. LBT is a carrier sense multiple access (English full name: Carrier Sense Multiple Access, CSMA for short) technology.

In the LAA system, an access channel is contended for in an LBT manner. However, in the manner, a start time point of occupying the channel is random. Therefore, a start time point at which a signal occurs on an LAA-LTE carrier is also random. In this case, a start time at which an LAA-LTE subframe occupies the channel is not aligned with a subframe boundary on which a subframe occupies the channel on a licensed spectrum. Therefore, after occupying the channel, a base station is very likely to first send an incomplete subframe, where a time of the incomplete subframe lasts until a corresponding subframe on the licensed spectrum ends; and then starts to send a complete subframe. That is, the first subframe is incomplete, a next subframe is complete, and the remaining subframe is aligned with a subframe on the licensed spectrum in terms of time, but the last subframe may be incomplete. If the first subframe is an incomplete subframe, because the first subframe is not aligned with the subframe boundary on the licensed spectrum, UE (English full name: User Equipment, UE for short) cannot learn of a start location of the incomplete subframe. Currently, in LAA-related solutions in the 3^{rd} Generation Partnership Project (English: 3rd Generation Partnership Project, 3GPP for short), a possible solution is as follows: A start location of a preamble signal (English: preamble) on an unlicensed spectrum is detected to obtain a start location for sending data on the unlicensed spectrum. The preamble is usually sent by the base station after preempting the channel and before sending the data. The preamble signal may be used for time-frequency synchronization and the like. If a start moment for sending the data is obtained in the LAA-LTE system, a receive end needs to continuously perform blind detection. Consequently, power consumption of the receive end is relatively large.

### SUMMARY

Embodiments of the present invention provide a data transmission method, a device, and a system, so as to narrow a blind detection range of a receive end, and accordingly reduce UE power consumption.

To achieve the foregoing objective, the following technical solutions are used in the embodiments of the present invention.

According to a first aspect, a data transmission method is provided, including:
configuring, by a base station, a subframe of an unlicensed carrier as n windows, where n is a positive integer;
obtaining, by the base station, a window identifier of a window to which an OFDM symbol corresponding to a start location for sending data belongs, where the window corresponding to the window identifier includes m orthogonal frequency division multiplexing OFDM symbols, and m is a positive integer; and
sending, by the base station, the window identifier to user equipment by using a licensed carrier.

With reference to the first aspect, in a first possible implementation, the data includes a preamble signal.

With reference to the first aspect, in a second possible implementation, the sending, by the base station, the window identifier to user equipment by using a licensed carrier includes:
adding, by the base station to downlink control information DCI of the licensed carrier, a bit used to indicate the window identifier, and sending the DCI to the user equipment.

With reference to the first aspect, in a third possible implementation, the sending, by the base station, the window identifier to user equipment by using a licensed carrier includes:
assigning, by the base station, a new meaning to an existing bit in downlink control information DCI (English full name: Downlink Control Information) of the licensed carrier to indicate the window identifier, and sending the DCI to the user equipment.

According to a second aspect, a data transmission method is provided, including:
receiving, by user equipment, a window identifier sent by a base station by using a licensed carrier, where a window corresponding to the window identifier includes m orthogonal frequency division multiplexing OFDM symbols, and m is a positive integer; and
obtaining, by the user equipment according to the window identifier, a start location that is for receiving data and that is corresponding to the orthogonal frequency division multiplexing OFDM symbol in the window, where the window is one of n windows obtained by configuring a subframe of an unlicensed carrier by the base station, and n is a positive integer.

With reference to the second aspect, in a first possible implementation, the data includes a preamble signal.

With reference to the second aspect, in a second possible implementation, the receiving, by user equipment, a window identifier sent by a base station by using a licensed carrier includes:
receiving, by the user equipment, downlink control information DCI sent by the base station, where a bit is newly added to the DCI to indicate the window identifier.

With reference to the second aspect, in a third possible implementation, the receiving, by user equipment, a window identifier sent by a base station by using a licensed carrier includes:
receiving, by the user equipment, downlink control information DCI sent by the base station, where a new meaning is assigned to an existing bit in the DCI to indicate the window identifier.

According to a third aspect, a base station is provided, including:
a configuration unit, configured to configure a subframe of an unlicensed carrier as n windows, where n is a positive integer;
an obtaining unit, configured to obtain a window identifier of a window to which an OFDM symbol corresponding to a start location for sending data belongs, where the window corresponding to the window identifier includes m orthogonal frequency division multiplexing OFDM symbols, and m is a positive integer; and
a sending unit, configured to send, to user equipment by using a licensed carrier, the window identifier obtained by the obtaining unit.

With reference to the third aspect, in a first possible implementation, the data includes a preamble signal.

With reference to the third aspect, in a second possible implementation, the sending unit is specifically configured to: add, to downlink control information DCI of the licensed carrier, a bit used to indicate the window identifier, and send the DCI to the user equipment.

With reference to the third aspect, in a third possible implementation, the sending unit is specifically configured to: assign a new meaning to an existing bit in downlink control information DCI of the licensed carrier to indicate the window identifier, and send the DCI to the user equipment.

According to a fourth aspect, user equipment is provided, including:
a receiving unit, configured to receive a window identifier sent by a base station by using a licensed carrier, where a window corresponding to the window identifier includes m orthogonal frequency division multiplexing OFDM symbols, and m is a positive integer; and
an obtaining unit, configured to obtain, according to the window identifier received by the receiving unit, a start location that is for receiving data and that is corresponding to the orthogonal frequency division multiplexing OFDM symbol in the window, where the window is one of n windows obtained by configuring a subframe of an unlicensed carrier by the base station, and n is a positive integer. With reference to the fourth aspect, in a first possible implementation, the data includes a preamble signal.

With reference to the fourth aspect, in a second possible implementation, the receiving unit is specifically configured to receive downlink control information DCI sent by the base station, where a bit is newly added to the DCI to indicate the window identifier.

With reference to the fourth aspect, in a third possible implementation, the receiving unit is specifically configured to receive downlink control information DCI sent by the base station, where a new meaning is assigned to an existing bit in the DCI to indicate the window identifier.

According to a fifth aspect, a base station is provided, including a processor, an interface circuit, a memory, and a bus, where the processor, the interface circuit, and the memory are connected and communicate with each other by using the bus;
the processor is configured to: configure a subframe of an unlicensed carrier as n windows, where n is a positive integer; and obtain a window identifier of a window to which an OFDM symbol corresponding to a start location for sending data belongs, where the window corresponding to the window identifier includes m orthogonal frequency division multiplexing OFDM symbols, and m is a positive integer; and
the interface circuit is configured to send, to user equipment by using a licensed carrier, the window identifier obtained by the processor.

With reference to the fifth aspect, in a first possible implementation, the data includes a preamble signal.

With reference to the fifth aspect, in a second possible implementation, the interface circuit is specifically configured to: add, to downlink control information DCI of the licensed carrier, a bit used to indicate the window identifier, and send the DCI to the user equipment.

With reference to the fifth aspect, in a third possible implementation, the interface circuit is specifically configured to: assign a new meaning to an existing bit in downlink control information DCI of the licensed carrier to indicate the window identifier, and send the DCI to the user equipment.

According to a sixth aspect, user equipment is provided, including a processor, an interface circuit, a memory, and a bus, where the processor, the interface circuit, and the memory are connected and communicate with each other by using the bus;
the interface circuit is configured to receive a window identifier sent by a base station by using a licensed carrier, where a window corresponding to the window identifier includes m orthogonal frequency division multiplexing OFDM symbols, and m is a positive integer; and
the processor is configured to obtain, according to the window identifier received by the interface circuit, a start location that is for receiving data and that is corresponding to the orthogonal frequency division multiplexing OFDM symbol in the window, where the window is one of n windows obtained by configuring a subframe of an unlicensed carrier by the base station, and n is a positive integer.

With reference to the sixth aspect, in a first possible implementation, the data includes a preamble signal.

With reference to the sixth aspect, in a second possible implementation, the interface circuit is specifically configured to receive downlink control information DCI sent by the base station, where a bit is newly added to the DCI to indicate the window identifier.

With reference to the sixth aspect, in a third possible implementation, the interface circuit is specifically configured to receive downlink control information DCI sent by the base station, where a new meaning is assigned to an existing bit in the DCI to indicate the window identifier.

According to a seventh aspect, a communications system is provided, applied to data transmission on an unlicensed spectrum, including the base station according to any one of the third aspect or the possible implementations of the third aspect and the user equipment according to any one of the fourth aspect or the possible implementations of the fourth aspect; or
including the base station according to any one of the fifth aspect or the possible implementations of the fifth aspect and the user equipment according to any one of the sixth aspect or the possible implementations of the sixth aspect. According to the data transmission method, the device, and the system that are provided in the embodiments of the present invention, the base station can configure the subframe of the unlicensed carrier as the n windows, where n is a positive integer; obtain the window identifier of the window to which the OFDM symbol corresponding to the start location for sending the data belongs; and then send the window identifier to the user equipment by using the licensed carrier; and after receiving the window identifier sent by the base station by using the licensed carrier, the user equipment obtains, according to the window identifier, the start location that is for receiving the data and that is corresponding to the orthogonal frequency division multiplexing OFDM symbol in the window. In this way, a blind detection range of a receive end can be narrowed, and UE power consumption can be accordingly reduced.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a communications system according to an embodiment of the present invention;
FIG. 2 is a schematic flowchart of a data transmission method according to an embodiment of the present invention;
FIG. 3 is a schematic diagram of division of windows that carry data according to an embodiment of the present invention;
FIG. 4 is another schematic diagram of division of windows that carry data according to an embodiment of the present invention;
FIG. 5 is a schematic flowchart of a data transmission method according to another embodiment of the present invention;
FIG. 6 is a schematic flowchart of a data transmission method according to still another embodiment of the present invention;
FIG. 7 is a schematic structural diagram of a base station according to an embodiment of the present invention;
FIG. 8 is a schematic structural diagram of user equipment according to an embodiment of the present invention;
FIG. 9 is a schematic structural diagram of a base station according to another embodiment of the present invention; and
FIG. 10 is a schematic structural diagram of user equipment according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

It should be understood that the technical solutions of the embodiments of the present invention may be applied to various communications systems, such as a Global System for Mobile Communications (Global System of Mobile communication, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), a Long Term Evolution (Long Term Evolution, LTE) system, an LTE frequency division duplex (Frequency Division Duplex, FDD) system, an LTE time division duplex (Time Division Duplex, TDD), a Universal Mobile Telecommunications System (Universal Mobile Telecommunication System, UMTS), and a Worldwide Interoperability for Microwave Access (Worldwide Interoperability for Microwave Access, WiMAX) communications system.

User equipment (English full name: User Equipment, UE for short) provided in the embodiments of the present invention may be a cellular phone, a cordless phone, a Session Initiation Protocol (English full name: Session Initiation Protocol, SIP for short) phone, a wireless local loop (English full name: Wireless Local Loop, WLL for short) station, a personal digital assistant (English full name: Personal Digital Assistant, PDA for short), a handheld device having a wireless communication function, an in-vehicle device, a wearable device, a computing device, or another device connected to a wireless modem.

A base station provided in the embodiments of the present invention may be a device that communicates with user equipment by using one or more sectors on an air interface in an access network. The base station may be configured to perform mutual conversion between a received over-the-air frame and an Internet Protocol (English full name: Internet Protocol, IP for short) packet, and serve as a router between the user equipment and a remaining part of the access network. The remaining part of the access network may include an IP network. The base station may further coordinate attribute management of the air interface. The base station may be a base transceiver station (English full name: Base Transceiver Station, BTS for short) in the Global System for Mobile Communications (English full name: Global System for Mobile communication, GSM for short) or Code Division Multiple Access (English full name: Code Division Multiple Access, CDMA for short), or may be a base station (English full name: Base Station, BS for short) in Wideband Code Division Multiple Access (English full name: Wideband Code Division Multiple Access, WCDMA for short), or may be an evolved NodeB (English full name: evolutional Node B, NodeB, eNB, or e-NodeB for short) in Long Term Evolution (English full name: Long Term Evolution, LTE for short), or may be, for another example, a macro base station or a micro base station in a cellular wireless communications system. This is not limited in the embodiments of the present invention.

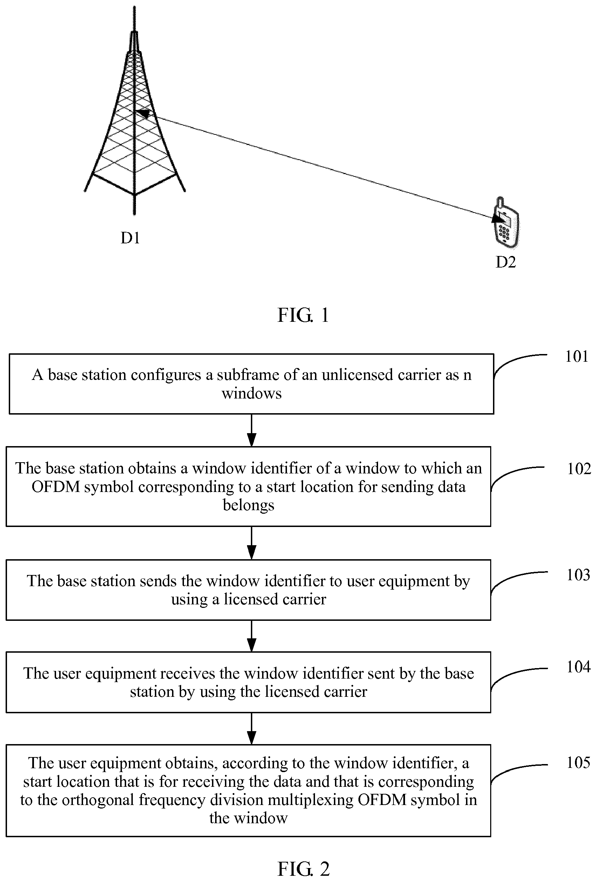

The embodiments of the present invention are applied to a communications system shown in FIG. 1. The communications system includes a base station D1 and user equipment D2. The base station D1 and the user equipment D2 need to transmit data in an unlicensed spectrum.

Specifically, an embodiment of the present invention provides a data transmission method. Referring to FIG. 2, the method includes the following steps.

101. A base station configures a subframe of an unlicensed carrier as n windows.

For the n windows, n is a positive integer.

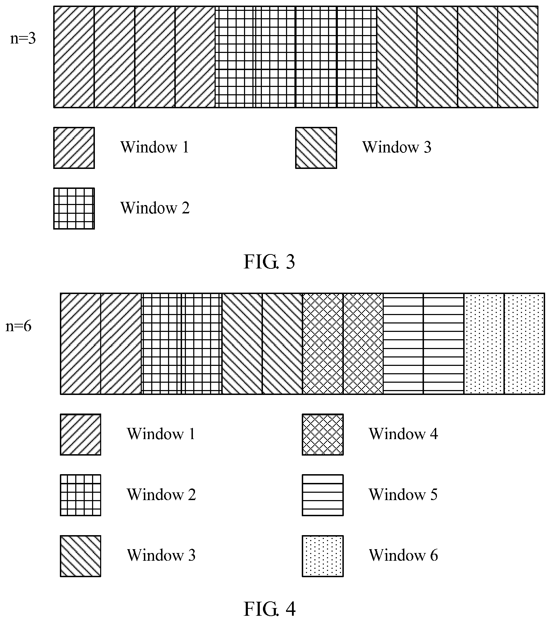

102. The base station obtains a window identifier of a window to which an OFDM symbol corresponding to a start location for sending data belongs. The window corresponding to the window identifier includes m orthogonal frequency division multiplexing OFDM symbols, and m is a positive integer. The subframe includes the n windows, and n is a positive integer. It should be noted that in each subframe, a normal cyclic prefix (English full name: Cyclic Prefix, CP for short) generally includes 14 OFDM symbols, and an extended CP generally includes 12 OFDM (English full name: Orthogonal Frequency Division Multiplexing, Chinese full name: orthogonal frequency division multiplexing technology) symbols. Each window should include an integer quantity of OFDM symbols. As shown in FIG. 3 and FIG. 4, an example is provided. Each subframe includes 12 OFDM symbols, and the 12 OFDM symbols may be equally divided into n=3 or n=6 windows. In this case, m=4, or m=2. Certainly, in another case, n=2, and m=6. An example figure is not given in this embodiment of the present invention. Certainly, alternatively, each window may include different quantities of OFDM symbols. In this case, m≤12. A case of the normal CP is similar. Details are not described.

It may be understood that the start location for sending the data in step 102 is a moment at which the base station preempts the unlicensed carrier.

103. The base station sends the window identifier to user equipment by using a licensed carrier.

104. The user equipment receives the window identifier sent by the base station by using the licensed carrier.

The window corresponding to the window identifier includes m orthogonal frequency division multiplexing OFDM symbols, and m is a positive integer.

105. The user equipment obtains, according to the window identifier, a start location that is for receiving the data and that is corresponding to the orthogonal frequency division multiplexing OFDM symbol in the window.

The window is one of the n windows obtained by configuring the subframe of the unlicensed carrier by the base station, and n is a positive integer. Optionally, the data includes a preamble signal. The preamble signal (English: preamble) is used to indicate the start location for sending the data on the unlicensed carrier, and the preamble signal is usually sent before packet data is sent. The start location for receiving the data may be obtained in the window in a blind detection manner in the prior art. Details are not described herein.

According to the data transmission method provided in this embodiment of the present invention, the base station can configure the subframe of the unlicensed carrier as the n windows, where n is a positive integer; obtain the window identifier of the window to which the OFDM symbol corresponding to the start location for sending the data belongs; and then send the window identifier to the user equipment by using the licensed carrier; and after receiving the window identifier sent by the base station by using the licensed carrier, the user equipment obtains, according to the window identifier, the start location that is for receiving the data and that is corresponding to the orthogonal frequency division multiplexing OFDM symbol in the window. In this way, a blind detection range of a receive end can be narrowed, and UE power consumption can be accordingly reduced.

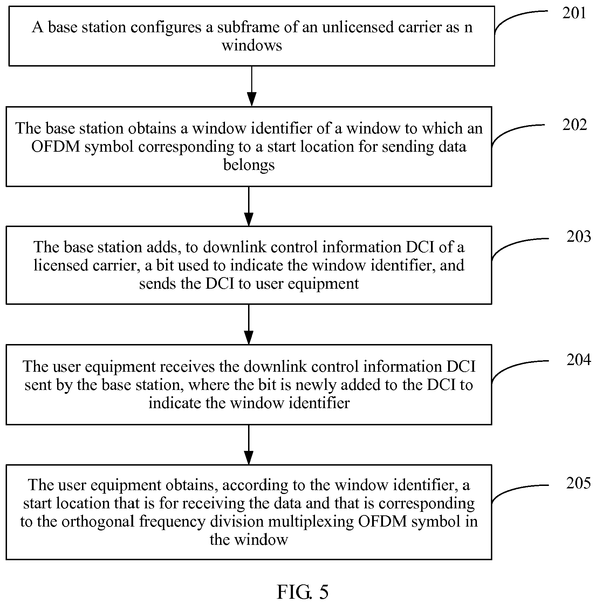

Another embodiment of the present invention provides a data transmission method, which is applied to data transmission on an unlicensed spectrum. Referring to FIG. 5, the method includes the following steps.

201. A base station configures a subframe of an unlicensed carrier as n windows.

For the n windows, n is a positive integer.

202. The base station obtains a window identifier of a window to which an OFDM symbol corresponding to a start location for sending data belongs.

The window corresponding to the window identifier includes m orthogonal frequency division multiplexing OFDM symbols, and m is a positive integer.

203. The base station adds, to downlink control information DCI of a licensed carrier, a bit used to indicate the window identifier, and sends the DCI to user equipment.

For example, a new bit is added to DCI of a licensed spectrum to indicate the window identifier (n<=14). Different quantities of added bits are corresponding to different quantities of windows. A maximum of four bits are added. For example, if two bits are added, there are four values: 00, 01, 10, and 11. In this case, four windows are obtained by means of division, 00 is used to indicate a window whose window identifier is 1, 01 is used to indicate a window whose window identifier is 2, 10 is used to indicate a window whose window identifier is 3, and 11 is used to indicate a window whose window identifier is 4. Therefore, if a preamble is in the window whose window identifier is 2, 01 is sent to the UE, and the UE performs, by using this indication information, detection in the window whose window identifier is 2, so that a blind detection range is narrowed.

203. The user equipment receives the downlink control information DCI sent by the base station, where the bit is newly added to the DCI to indicate the window identifier.

204. The user equipment obtains, according to the window identifier, a start location that is for receiving the data and that is corresponding to the orthogonal frequency division multiplexing OFDM symbol in the window.

The window is one of the n windows obtained by configuring the subframe of the unlicensed carrier by the base station, and n is a positive integer.

According to the data transmission method provided in this embodiment of the present invention, the base station can configure the subframe of the unlicensed carrier as the n windows, where n is a positive integer; obtain the window identifier of the window to which the OFDM symbol corresponding to the start location for sending the data belongs; and then send the window identifier to the user equipment by using the licensed carrier; and after receiving the window identifier sent by the base station by using the licensed carrier, the user equipment obtains, according to the window identifier, the start location that is for receiving the data and that is corresponding to the orthogonal frequency division multiplexing OFDM symbol in the window. In this way, a blind detection range of a receive end can be narrowed, and UE power consumption can be accordingly reduced.

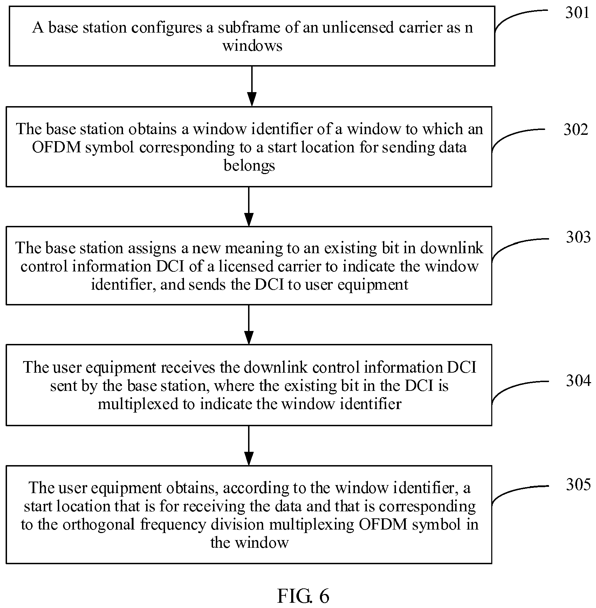

Another embodiment of the present invention provides a data transmission method, which is applied to data transmission on an unlicensed spectrum. Referring to FIG. 6, the method includes the following steps.

301. Abase station configures a subframe of an unlicensed carrier as n windows.

For the n windows, n is a positive integer.

302. The base station obtains a window identifier of a window to which an OFDM symbol corresponding to a start location for sending data belongs.

The window corresponding to the window identifier includes m orthogonal frequency division multiplexing OFDM symbols, and m is a positive integer.

303. The base station assigns a new meaning to an existing bit in downlink control information DCI of a licensed carrier to indicate the window identifier, and sends the DCI to user equipment.

For example, when a quantity of packets is relatively small, existing signaling in the DCI may be multiplexed. For example, one bit in an RV (English full name: Redundancy Version, Chinese: redundancy version) version field in the DCI is used to indicate the window identifier. Certainly, a disadvantage of this solution is that a scheduling constraint may be brought. Certainly, alternatively, those undefined bits or digit bits may be selected from existing signaling and be assigned new meanings. For a specific manner, refer to a manner of adding the bit to the DCI. Details are not described herein again. In this solution, a scheduling constraint can be reduced, signaling overheads can be reduced, and likewise, a blind detection range can be narrowed.

304. The user equipment receives the downlink control information DCI sent by the base station, where a new meaning is assigned to the existing bit in the DCI to indicate the window identifier.

305. The user equipment obtains, according to the window identifier, a start location that is for receiving the data and that is corresponding to the orthogonal frequency division multiplexing OFDM symbol in the window.

The window is one of the n windows obtained by configuring the subframe of the unlicensed carrier by the base station, and n is a positive integer.

According to the data transmission method provided in this embodiment of the present invention, the base station can configure the subframe of the unlicensed carrier as the n windows, where n is a positive integer; obtain the window identifier of the window to which the OFDM symbol corresponding to the start location for sending the data belongs; and then send the window identifier to the user equipment by using the licensed carrier; and after receiving the window identifier sent by the base station by using the licensed carrier, the user equipment obtains, according to the window identifier, the start location that is for receiving the data and that is corresponding to the orthogonal frequency division multiplexing OFDM symbol in the window. In this way, a blind detection range of a receive end can be narrowed, and UE power consumption can be accordingly reduced.

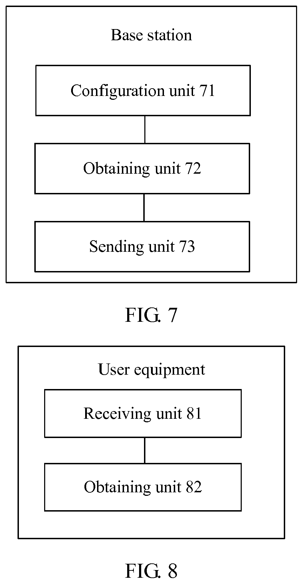

Referring to FIG. 7, a base station is provided, including:
a configuration unit 71, configured to configure a subframe of an unlicensed carrier as n windows, where n is a positive integer;
an obtaining unit 72, configured to obtain a window identifier of a window to which an OFDM symbol corresponding to a start location for sending data belongs, where the window corresponding to the window identifier includes m orthogonal frequency division multiplexing OFDM symbols, and m is a positive integer; and
a sending unit 73, configured to send, to user equipment by using a licensed carrier, the window identifier obtained by the obtaining unit 72.

In a preferred manner, the data includes a preamble signal.

Optionally, the sending unit 73 is specifically configured to: add, to downlink control information DCI of the licensed carrier, a bit used to indicate the window identifier, and send the DCI to the user equipment.

Optionally, the sending unit 73 is specifically configured to: assign a new meaning to an existing bit in downlink control information DCI of the licensed carrier to indicate the window identifier, and send the DCI to the user equipment.

It should be noted that the sending unit 73 in this embodiment may be an interface circuit having a transmitting function in the base station, for example, a transmitter. The configuration unit 71 and the obtaining unit 72 may be standalone processors; or may be integrated into a processor of the base station for implementation; or may be stored in a memory of the base station in a form of program code, and functions of the configuration unit 71 and the obtaining unit 72 are invoked and performed by a processor of the base station. The processor described herein may be a central processing unit (English full name: Central Processing Unit, CPU for short), an application-specific integrated circuit (English full name: Application Specific Integrated Circuit, ASIC for short), or one or more integrated circuits configured to implement this embodiment of the present invention.

The base station provided in this embodiment of the present invention can configure the subframe of the unlicensed carrier as the n windows, where n is a positive integer; obtain the window identifier of the window to which the OFDM symbol corresponding to the start location for sending the data belongs; and then send the window identifier to the user equipment by using the licensed carrier, so that after receiving the window identifier sent by the base station by using the licensed carrier, the user equipment obtains, according to the window identifier, a start location that is for receiving the data and that is corresponding to the orthogonal frequency division multiplexing OFDM symbol in the window. In this way, a blind detection range of a receive end can be narrowed, and UE power consumption can be accordingly reduced. Referring to FIG. 8, user equipment is provided, including:
a receiving unit 81, configured to receive a window identifier sent by a base station by using a licensed carrier, where a window corresponding to the window identifier includes m orthogonal frequency division multiplexing OFDM symbols, and m is a positive integer; and
an obtaining unit 82, configured to obtain, according to the window identifier received by the receiving unit 81, a start location that is for receiving data and that is corresponding to the orthogonal frequency division multiplexing OFDM symbol in the window, where the window is one of n windows obtained by configuring a subframe of an unlicensed carrier by the base station, and n is a positive integer.

Optionally, the data includes a preamble signal.

Optionally, the receiving unit 81 is specifically configured to receive downlink control information DCI sent by the base station, where a bit is newly added to the DCI to indicate the window identifier.

Optionally, the receiving unit 81 is specifically configured to receive downlink control information DCI sent by the base station, where a new meaning is assigned to an existing bit in the DCI to indicate the window identifier.

It should be noted that the receiving unit 81 in this embodiment may be an interface circuit having a receiving function in the user equipment, for example, a receiver. The obtaining unit 82 may be a standalone processor; or may be integrated into a processor of the user equipment for implementation; or may be stored in a memory of the user equipment in a form of program code, and functions of the obtaining unit 82 are invoked and performed by a processor of the user equipment. The processor described herein may be a central processing unit (English full name: Central Processing Unit, CPU for short), an application-specific integrated circuit (English full name: Application Specific Integrated Circuit, ASIC for short), or one or more integrated circuits configured to implement this embodiment of the present invention. According to the user equipment provided in this embodiment of the present invention, the base station configures the subframe of the unlicensed carrier as the n windows, where n is a positive integer; obtains the window identifier of the window to which the OFDM symbol corresponding to the start location for sending the data belongs; and sends the window identifier to the user equipment by using the licensed carrier. After receiving the window identifier sent by the base station by using the licensed carrier, the user equipment obtains, according to the window identifier, the start location that is for receiving the data and that is corresponding to the orthogonal frequency division multiplexing OFDM symbol in the window. In this way, a blind detection range of a receive end can be narrowed, and UE power consumption can be accordingly reduced.

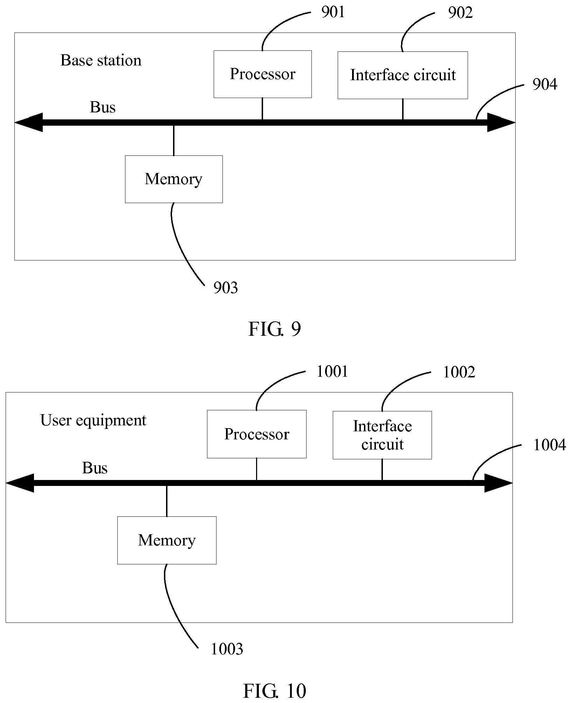

Referring to FIG. 9, a base station is provided, including a processor 901, an interface circuit 902, a memory 903, and a bus 904. The processor 901, the interface circuit 902, and the memory 903 are connected and communicate with each other by using the bus 904.

It should be noted that the processor 901 herein may be one processor or may be a collective term of multiple processing elements. For example, the processor may be a central processing unit CPU, may be an application-specific integrated circuit ASIC, or may be one or more integrated circuits configured to implement this embodiment of the present invention, for example, one or more microprocessors (English full name: digital singnal processor, DSP for short) or one or more field programmable gate arrays (English full name: Field Programmable Gate Array, FPGA for short).

The memory 903 may be one storage apparatus or may be a collective term of multiple storage elements, and is configured to store executable program code or a parameter, data, and the like that are required for running an access network management device. In addition, the memory 903 may include a random access memory (English full name: Random-Access Memory, RAM for short), or may include a nonvolatile memory (English full name: non-volatile memory, NVRAM for short), such as a magnetic disk memory or a flash memory (Flash).

The bus 904 may be an industry standard architecture (English full name: Industry Standard Architecture, ISA for short) bus, a peripheral component interconnect (English full name: Peripheral Component, PCI for short) bus, an extended industry standard architecture (English full name: Extended Industry Standard Architecture, EISA for short) bus, or the like. The bus 904 may be classified into an address bus, a data bus, a control bus, and the like. For ease of representation, only one bold line is used in FIG. 9 for representation, but it does not indicate that there is only one bus or only one type of bus.

The processor 901 is configured to: configure a sub frame of an unlicensed carrier as n windows, where n is a positive integer; and obtain a window identifier of a window to which an OFDM symbol corresponding to a start location for sending data belongs. The window corresponding to the window identifier includes m orthogonal frequency division multiplexing OFDM symbols, and m is a positive integer.

The interface circuit 902 is configured to send, to user equipment by using a licensed carrier, the window identifier obtained by the processor 901.

The base station provided in this embodiment of the present invention can configure the subframe of the unlicensed carrier as the n windows, where n is a positive integer; obtain the window identifier of the window to which the OFDM symbol corresponding to the start location for sending the data belongs; and then send the window identifier to the user equipment by using the licensed carrier. After receiving the window identifier sent by the base station by using the licensed carrier, the user equipment obtains, according to the window identifier, a start location that is for receiving the data and that is corresponding to the orthogonal frequency division multiplexing OFDM symbol in the window. In this way, a blind detection range of a receive end can be narrowed, and UE power consumption can be accordingly reduced. Further, in a preferred manner, the data includes a preamble signal.

Optionally, the interface circuit 902 is specifically configured to: add, to downlink control information DCI of the licensed carrier, a bit used to indicate the window identifier, and send the DCI to the user equipment.

Optionally, the interface circuit 902 is specifically configured to: assign a new meaning to an existing bit in downlink control information DCI of the licensed carrier to indicate the window identifier, and send the DCI to the user equipment.

Referring to FIG. 10, user equipment is provided, applied to data transmission on an unlicensed spectrum, including a processor 1001, an interface circuit 1002, a memory 1003, and a bus 1004. The processor 1001, the interface circuit 1002, and the memory 1003 are connected and communicate with each other by using the bus 1004. Optionally, the interface circuit 1002 is configured to receive a window identifier sent by a base station by using a licensed carrier. A window corresponding to the window identifier includes m orthogonal frequency division multiplexing OFDM symbols, and m is a positive integer.

The processor 1001 is configured to obtain, according to the window identifier received by the interface circuit 1002, a start location that is for receiving data and that is corresponding to the orthogonal frequency division multiplexing OFDM symbol in the window. The window is one of n windows obtained by configuring a subframe of an unlicensed carrier by the base station, and n is a positive integer. According to the user equipment provided in this embodiment of the present invention, the base station configures the subframe of the unlicensed carrier as the n windows, where n is a positive integer; obtains the window identifier of the window to which the OFDM symbol corresponding to a start location for sending the data belongs; and sends the window identifier to the user equipment by using the licensed carrier. After receiving the window identifier sent by the base station by using the licensed carrier, the user equipment obtains, according to the window identifier, the start location that is for receiving the data and that is corresponding to the orthogonal frequency division multiplexing OFDM symbol in the window. In this way, a blind detection range of a receive end can be narrowed, and UE power consumption can be accordingly reduced. Optionally, the data includes a preamble signal.

Optionally, the interface circuit 1102 is specifically configured to receive downlink control information DCI sent by the base station, where a bit is newly added to the DCI to indicate the window identifier.

Optionally, the interface circuit 1102 is specifically configured to receive downlink control information DCI sent by the base station, where a new meaning is assigned to an existing bit in the DCI to indicate the window identifier.

In addition, a computer readable media (or medium) is provided, including a computer readable instruction that performs, upon being executed, the following operation: performing operations of steps 101 to 105, 201 to 205, or 301 to 305 in the methods in the foregoing embodiments.

In addition, a computer program product is provided, including the foregoing computer readable medium.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, with reference to the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for ease and brevity of description, for a detailed working process of the foregoing system, apparatus, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (ROM for short, English full name: Read-Only Memory), a random access memory (RAM for short, English full name: Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, comprising:
configuring, by a base station, a subframe of an unlicensed carrier as n windows, wherein n is a positive integer;
obtaining, by the base station, a window identifier of a window to which an OFDM symbol corresponding to a start location for sending data belongs, wherein the window corresponding to the window identifier comprises m orthogonal frequency division multiplexing OFDM symbols, and m is a positive integer; and
sending, by the base station, the window identifier to user equipment by using a licensed carrier.

2. The method according to claim 1, wherein the data comprises a preamble signal.

3. The method according to claim 1, wherein the sending, by the base station, the window identifier to user equipment by using a licensed carrier comprises:
adding, by the base station to downlink control information DCI of the licensed carrier, a bit used to indicate the window identifier, and sending the DCI to the user equipment.

4. The method according to claim 1, wherein the sending, by the base station, the window identifier to user equipment by using a licensed carrier comprises:
assigning, by the base station, a new meaning to an existing bit in downlink control information DCI of the licensed carrier to indicate the window identifier, and sending the DCI to the user equipment.

5. A data transmission method, comprising:
receiving, by user equipment, a window identifier sent by a base station by using a licensed carrier, wherein a window corresponding to the window identifier comprises m orthogonal frequency division multiplexing OFDM symbols, and m is a positive integer; and
obtaining, by the user equipment according to the window identifier, a start location that is for receiving data and that is corresponding to the orthogonal frequency division multiplexing OFDM symbol in the window, wherein the window is one of n windows obtained by configuring a subframe of an unlicensed carrier by the base station, and n is a positive integer.

6. The method according to claim 5, wherein the data comprises a preamble signal.

7. The method according to claim 5, wherein the receiving, by user equipment, a window identifier sent by a base station by using a licensed carrier comprises:
receiving, by the user equipment, downlink control information DCI sent by the base station, wherein a bit is newly added to the DCI to indicate the window identifier.

8. The method according to claim 5, wherein the receiving, by user equipment, a window identifier sent by a base station by using a licensed carrier comprises:
receiving, by the user equipment, downlink control information DCI sent by the base station, wherein a new meaning is assigning to an existing bit in the DCI to indicate the window identifier.

9. Abase station, comprising:
a configuration unit, configured to configure a subframe of an unlicensed carrier as n windows, wherein n is a positive integer;
an obtaining unit, configured to obtain a window identifier of a window to which an OFDM symbol corresponding to a start location for sending data belongs, wherein the window corresponding to the window identifier comprises m orthogonal frequency division multiplexing OFDM symbols, and m is a positive integer; and
a sending unit, configured to send, to user equipment by using a licensed carrier, the window identifier obtained by the obtaining unit.

10. The base station according to claim 9, wherein the data comprises a preamble signal.

11. The base station according to claim 9, wherein the sending unit is specifically configured to: add, to downlink control information DCI of the licensed carrier, a bit used to indicate the window identifier, and send the DCI to the user equipment.

12. The base station according to claim 9, wherein the sending unit is specifically configured to: assign a new meaning to an existing bit in downlink control information DCI of the licensed carrier to indicate the window identifier, and send the DCI to the user equipment.

13. User equipment, comprising:
a receiving unit, configured to receive a window identifier sent by a base station by using a licensed carrier, wherein a window corresponding to the window identifier comprises m orthogonal frequency division multiplexing OFDM symbols, and m is a positive integer; and
an obtaining unit, configured to obtain, according to the window identifier received by the receiving unit, a start location that is for receiving data and that is corresponding to the orthogonal frequency division multiplexing OFDM symbol in the window, wherein the window is one of n windows obtained by configuring a subframe of an unlicensed carrier by the base station, and n is a positive integer.

14. The device according to claim 13, wherein the data comprises a preamble signal.

15. The device according to claim 13, wherein the receiving unit is specifically configured to receive downlink control information DCI sent by the base station, wherein a bit is newly added to the DCI to indicate the window identifier.

16. The device according to claim 13, wherein the receiving unit is specifically configured to receive downlink control information DCI sent by the base station, wherein a new meaning is assigned to an existing bit in the DCI to indicate the window identifier.

17. A base station, comprising a processor, an interface circuit, a memory, and a bus, wherein the processor, the interface circuit, and the memory are connected and communicate with each other by using the bus;
the processor is configured to: configure a subframe of an unlicensed carrier as n windows, wherein n is a positive integer; and obtain a window identifier of a window to which an OFDM symbol corresponding to a start location for sending data belongs, wherein the window corresponding to the window identifier comprises m orthogonal frequency division multiplexing OFDM symbols, and m is a positive integer; and
the interface circuit is configured to send, to user equipment by using a licensed carrier, the window identifier obtained by the processor.

18. The base station according to claim 17, wherein the data comprises a preamble signal.

19. The base station according to claim 17, wherein the interface circuit is specifically configured to: add, to downlink control information DCI of the licensed carrier, a bit used to indicate the window identifier, and send the DCI to the user equipment.

20. The base station according to claim 17, wherein the interface circuit is specifically configured to: assign a new meaning to an existing bit in downlink control information DCI of the licensed carrier to indicate the window identifier, and send the DCI to the user equipment.

21. User equipment, comprising a processor, an interface circuit, a memory, and a bus, wherein the processor, the interface circuit, and the memory are connected and communicate with each other by using the bus;
the interface circuit is configured to receive a window identifier sent by a base station by using a licensed carrier, wherein a window corresponding to the window identifier comprises m orthogonal frequency division multiplexing OFDM symbols, and m is a positive integer; and
the processor is configured to obtain, according to the window identifier received by the interface circuit, a start location that is for receiving data and that is corresponding to the orthogonal frequency division multiplexing OFDM symbol in the window, wherein the window is one of n windows obtained by configuring a subframe of an unlicensed carrier by the base station, and n is a positive integer.

22. The device according to claim 21, wherein the data comprises a preamble signal.

23. The device according to claim 21, wherein the interface circuit is specifically configured to receive downlink control information DCI sent by the base station, wherein a bit is newly added to the DCI to indicate the window identifier.

24. The device according to claim 21, wherein the interface circuit is specifically configured to receive downlink control information DCI sent by the base station, wherein a new meaning is assigned to an existing bit in the DCI to indicate the window identifier.

25. A communications system, applied to data transmission on an unlicensed spectrum, comprising the base station according to any one of claims 9 to 12 and the user equipment according to any one of claims 13 to 16; or
comprising the base station according to any one of claims 17 to 20 and the user equipment according to any one of claims 21 to 24.
